# EUROPÄISCHE PATENTSCHRIFT

(11) **EP 2 132 751 B1**
(45) Veröffentlichungstag und Bekanntmachung des Hinweises auf die Patenterteilung: **16.02.2011**
(21) Anmeldenummer: 08717602.0
(22) Anmeldetag: 11.03.2008
(51) Int. Cl.: G21B 1/13

(54) **BAUTEILE FÜR WÄRMESENKEN**
COMPONENTS FOR REDUCING HEAT
COMPOSANTS POUR DISSIPATEURS THERMIQUES

(30) Priorität: 31.03.2007 DE 102007016375
(43) Veröffentlichungstag der Anmeldung: 16.12.2009
(73) Patentinhaber: Deutsches Zentrum für Luft- und Raumfahrt, 51147 Köln (DE)
(72) Erfinder: PETERS, Petrus, 53819 Neunkirchen-Seelscheid (DE); SCHUMANN, Hartmut, 53819 Neunkirschen-Seelscheid (DE); HEMPTENMACHER, Jörg, 53844 Troisdorf (DE)
(74) Vertreter: von Kreisler Selting Werner
(86) Internationale Anmeldenummer: PCT/EP2008/052855
(87) Internationale Veröffentlichungsnummer: WO 2008/119622

(56) Entgegenhaltungen:
- US-A- 5 182 075
- US-A1- 2004 195 296
- IBBOTT C ET AL: "Advanced solutions for beryllium and tungsten plasma-facing components" FUSION ENGINEERING AND DESIGN ELSEVIER SWITZERLAND, Bd. 39-40, September 1998 (1998-09), Seiten 409-417, XP002484948 ISSN: 0920-3796
- YOU J H ET AL: "Structural analysis of a plasma facing component reinforced with fibrous metal matrix composite laminate" JOURNAL OF NUCLEAR MATERIALS ELSEVIER NETHERLANDS, Bd. 329-333, 1. August 2004 (2004-08-01), Seiten 702-705, XP002484949 ISSN: 0022-3115
- PETERS ET AL.: "Elevated temperature properties of SiC-fibre reinforced CuCr1Zr, a candidate heat sink material for application in fusion reactors" PHYSICA SCRIPTA, Bd. t128, 8. März 2007 (2007-03-08), Seiten 209-212, XP002485243 UK
- PETERS P ET AL: "Production of MMCs on the basis of fibres coated with the metal alloy magnetron sputtering" MATERIALS SCIENCE FORUM TRANS TECH PUBLICATIONS SWITZERLAND, Bd. 539-543, 2007, Seiten 931-935, XP008093402 ISSN: 0255-5476
- YOU J H ET AL: "Overall mechanical properties of fiber-reinforced metal matrix composites for fusion applications" JOURNAL OF NUCLEAR MATERIALS ELSEVIER NETHERLANDS, Bd. 305, Nr. 1, September 2002 (2002-09), Seiten 14-20, XP002484950 ISSN: 0022-3115
- PETERS ET AL.: "Faser- und drahtverstärkte Kupferlegierungen als Wärmesenke für Fusionsreaktoren" MATERIALWISSENSCHAFT UND WERKSTOFFTECHNIK, Bd. 38, Nr. 9, September 2007 (2007-09), Seiten 755-765, XP002485244 Weinheim

## Beschreibung

Gegenstand der Erfindung ist ein Bauteil für Wärmesenken, insbesondere eines Fusionsreaktors oder der Brennkammer eines Raketentriebwerks.

Im Divertor eines Fusionsreaktors muss ein hoher Wärmefluss (20MW/m²) abgeleitet werden. Dies geschieht in der Regel mit wassergekühlten oder zukünftig heliumgekühlten Komponenten aus Werkstoffen mit einer hohen Temperaturbeständigkeit und Wärmeleitfähigkeit. In der Komponente entstehen als Folge des hohen Temperaturgradienten thermische Spannungen, wenn Kombinationen von unterschiedlichen Werkstoffen verwendet werden.

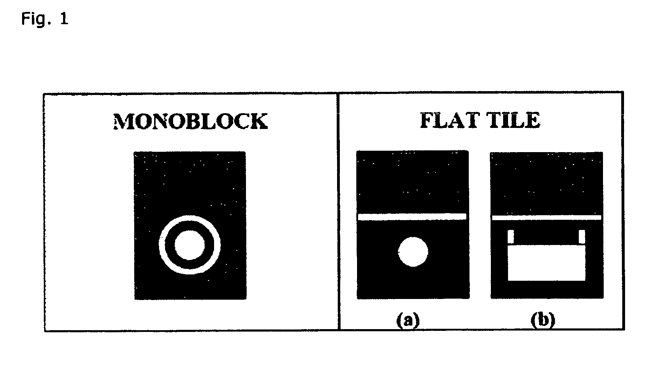

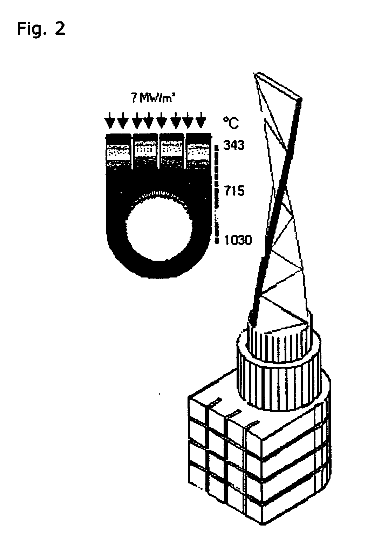

Aus bestehenden Patenten und der Literatur sind verschiedene Lösungsansätze für Komponenten im Divertor bekannt. Wegen ihrer hohen Temperaturbeständigkeit werden als Werkstoff für den direkten Kontakt mit dem heißen Plasma Wolfram (W) oder CFC (kohlenstofffaserverstärkter Kohlenstoff) eingesetzt. Die von diesen Werkstoffen übertragene Wärme muss an das Medium Wasser (oder Wasserdampf) in Kupferrohren (Cu99) übertragen werden. Verschiedene bekannte Entwurfstypen sind in Fig. 1 und 2 dargestellt:

Fig. 1 zeigt das unterschiedliche Design von Divertor-Komponenten mit dem Monoblock-Design (Cu-Rohr durch monolithisches Wolfram oder CFC, in Fig. 1 links) und dem "Flat-Tile-Design" in dem Wolfram oder CFC mit einer Cu-Legierungs-Komponente verschweißt ist. Letztere Flat-Tile-Entwürfe zeigen Fig. 1 rechts, mit a) Kühlung durch Cu-Rohr oder b) Hypervatron-Kühlung. Der Vorteil des Monoblock-Designs liegt in der einfachen Konstruktion, während das komplexere "Flat-Tile-Design" eine bessere Wärmeableitung gewährleistet (thermische Leitfähigkeit von Wolfram 140W/m/K, jedoch 360W/m/K für die CuCr1Zr-Legierung). (Engineering of Plasma-Facing Components, by Mario Merola, Tutorial Course at 11^{th}. International Workshop on Plasma-Facing Materials and Components for Fusion Applications (PFMC-11, Oct. 10-12, 2006, Greifswald)

Fig. 2 zeigt die Temperaturverteilung in einer wasserdampfgekühlten (300°C) Wolfram-Monoblock-Divertor-Komponente. Die Effizienz der Kühlung wird gesteigert durch Verwirbelungskomponenten im Kühlrohr. Bei einem Wärmefluss von 7 MW/m² stellt sich eine Temperatur von 1030 °C auf der Plasmaseite ein. Auf dieser Seite wird die Komponente segmentiert, um größere thermische Spannungen und Wirbelstromfelder zu vermeiden. (FE-Analyse, Webseite CEA, Cadarache, Frankreich, http://www-fusion-magnetique.cea.fr).

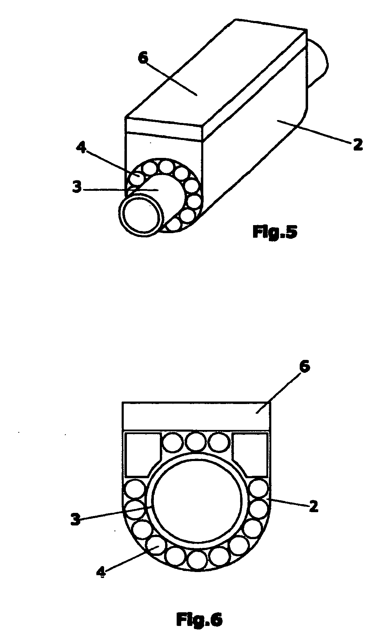

Beim Monoblock-Design (Fig. 1, links und Fig. 2) in Wolfram ist die geringere Wärmeleitfähigkeit von Wolfram von Nachteil. Beim "Flat-Tile-Design" werden verschiedene Werkstoffe zum Beispiel Wolfram auf CuCr1Zr eingesetzt (Fig. 1, rechts und Fig. 5). Dabei treten erhebliche thermische Spannungen im Übergang Wolfram-Cu-Legierung auf, die schließlich zum Ablösen des Wolframs führen können. Die Temperaturbeständigkeit der Cu-Legierung ist außerdem begrenzt (450°C unter Dauerbelastung).

Abstracts of Japan 2004-309485 beschreibt einen Formkörper aus einem Verbundmaterial zum Einsatz in einem Kernfusionsreaktor. Das Verbundmaterialstrukturbauteil eines Fusionsreaktors umfasst im Wesentlichen einen dem Plasma zugewandten Bereich 2 aus Wolfram oder einer Wolframlegierung, einen Wärmeleitungsbereich aus Kupfer oder einer Kupferlegierung mit einem durchschnittlichen Kristallkorndurchmesser von mehr als 100 µm und eine Zwischenschicht 3 eines Verbundmetalls mit hoher Schmelztemperatur und Kupfer. Die Schicht aus hochschmelzendem Metall und Kupfer zeigt eine makroskopische einheitliche Konzentrationsverteilung von Kupfer und dem Metall. Die hochschmelzende Metallkomponente ist in der Zwischenschicht mit einem Volumenanteil von mehr als 10 Vol.-% und weniger als 40 Vol.-% vertreten.

Patent Abstracts of Japan 2003-286558 A beschreibt ein Verfahren zur Herstellung von wärmeaufnehmenden Vorrichtungen einer Kernfusionsanlage. Das Verfahren ist besonders dadurch gekennzeichnet, dass eine Struktur durch thermisches Metallsprühen hergestellt wird. Dabei wird auf eine Komponente mit Kühlkanal eine Mischung von Metallen gesprüht. Dieses Gemisch eines Materials einer wärmeaufnehmenden Platte, beispielsweise aus Wolfram und ein Material einer Wärmesenke, beispielsweise aus Kupfer variiert in der Zusammensetzung und verbindet die Wolframplatte mit dem Kühlkörper.

DE 43 35 557 C1 beschreibt ein Verfahren zum Herstellen von langfaserverstärkten Bauteilen. Hier werden in einen Hohlraum eines Werkstücks aus Matrixmaterial Langfasern eingebracht, die parallel zueinander verlaufen. Die Langfasern sind mit Matrixmaterial beschichtet. Das derart präparierte Werkstück wird einem heißisostatischem Pressvorgang ausgesetzt, und danach wird das Werkstück zur Herstellung des Bauteils bearbeitet. Das Bauteil weist dabei eine Ummantelung aus Matrixmaterial mit einem langfaserverstärkten Kern aus in Matrixmaterial eingebetteten Langfasern auf.

Patent Abstracts of Japan 09-360223 (Publikationsnummer: 11-190787) beschreibt eine wärmebeständige direkte Verbindung eines Materials mit hohem Schmelzpunkt und eines hochwärmeleitfähigen Materials sowie ein Verfahren zur Herstellung der Verbindung derselben. Ein Kernfusionsreaktor umfasst üblicherweise ein Vakuumgefäß, eine Spule zur Erzeugung oder Ausrichtung eines wasserstoffisotopen Plasmas und eine Kühlpassage, in der ein Kühlmittel zum Kühlen vorhanden ist. Weiterhin ist üblicherweise eine Kühlplatte vorhanden, die zum Plasma hin ausgerichtet ist. Das hier beschriebene Bauteil der Kühlpassage besteht aus einer Kupferlegierung mit einer hohen thermischen Leitfähigkeit und einer Kühlplatte aus Wolfram mit einem hohen Schmelzpunkt. Die Kupferlegierung und das Wolfram sind direkt durch heißisostatisches Pressen ohne dazwischen befindliches Lötmaterial verbunden.

Ibboh et al. (Fusion Engineering and Design, Bd 39-40, Sep. 1998, seiten 409-417) offenbaren die Verwendung eines Cu-Schicht zwischen der w-Bauteil und des Cu-Legierung-Rohrs.

You et al (Journal of Nuclear Materials, Bd 329-333, 2004, Seiten 702-705) offenbaren die Verwendung von Fasern mit Matrixmaterial zwischen einer w-Bauteil und einer Cu-Legierung-Bauteil.

Die Aufgabe der vorliegenden Erfindung besteht darin, die thermische Ausdehnung der Cu-Legierung zu vermindern.

Die vorstehend genannte Aufgabe wird gelöst durch ein Bauteil 1 aus hochtemperaturfestem Oberflächenmaterial 2 und wenigstens einer im Inneren verlaufenden Kühlmittelleitung 3, das dadurch gekennzeichnet ist, dass der Zwischenraum zwischen dem Oberflächenmaterial 2 und der Kühlmittelleitung 3 hochtemperaturfeste Drähte und/oder Fasern 4 in einem temperaturbeständigen Matrixmaterial 5 umfasst.

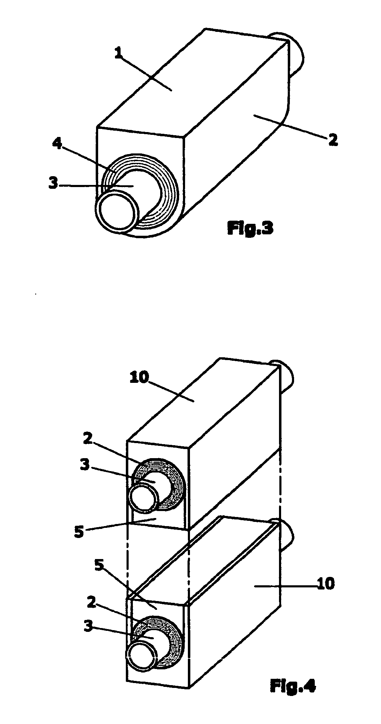

Durch Einsatz einer wolframdrahtverstärkten Cu-Legierung (CuCr1Zr) anstelle einer unverstärkten Legierung wird die thermische Ausdehnung der Cu-Legierung vermindert. Bei der Bauart "Flat-Tile" wird eine Wolframbewehrung 6 mit einem Körper aus W-Draht und/oder Faserverstärktem CuCr1Zr 4 und einer innenliegenden Kühlmittelleitung verbunden (siehe Fig. 5). Bei der Bauart "Doppel-Ring" wird eine Vorform, bestehend aus einem Wolframhohlkörper mit dem CuCr1Zr-beschichteten W-Draht und/oder Faser gefüllt, vakuumverschweißt und in einer Heiß-Isostatischen-Presse konsolidiert (Fig. 3,4). Die Vorteile umfassen eine geringere thermische Spannung in der Grenzfläche zwischen W-Komponente und verstärkter Kupferlegierung. Außerdem wird eine höhere thermische Beständigkeit der Cu-Legierung durch W-Drahtverstärkung und/oder Faser erreicht.

Kern der Erfindung ist es einerseits die Einsatztemperatur der verwendeten Cu-Legierungen durch Draht- und/oder Faserverstärkung zu erhöhen und andererseits durch diese Verstärkung die thermische Ausdehnung der Cu-Legierung zu reduzieren. Die Verwendung der wolframdrahtverstärkten Cu-Legierung anstelle der unverstärkten Cu-Legierung und die Herstellung des Werkstoffverbundes in einem HIP-Vorgang sind die wesentlichsten Elemente der Erfindung. Die vorliegende Erfindung (Fig. 3,4) reduziert die Größe der Problembereiche. Die thermischen Spannungen im Materialübergang vom W zum W/CuCr1Zr-Verbundwerkstoff werden durch die eingebetteten W-Drähte und/oder Fasern reduziert. Außerdem gibt es bei dieser Bauart keine Materialübergänge an der Oberfläche (also keine dadurch verursachten thermischen Spannungen, sondern nur an den Enden).

Besonders bevorzugt im Sinne der vorliegenden Erfindung umfasst das Bauteil 1 temperaturfestes Oberflächenmaterial 2 aus Wolfram, Wolframlegierungen oder keramische Fasern, insbesondere SiC-Drähte der Fasern. In gleicher Weise ist selbstverständlich auch eine entsprechend hochtemperaturfeste Fläche aus Wolframlegierungen einsetzbar.

In gleicher Weise wie das hochtemperaturfeste Oberflächenmaterial 2 können auch die hochtemperaturfesten Drähte und/oder Fasern 4 aus Wolfram oder Wolframlegierungen bestehen beziehungsweise dieses enthalten.

Die Verstärkungsdrähte und/oder Fasern 4 können sich in axialer oder tangentialer Richtung zur Kühlmittelleitung 3 erstrecken (Darstellung Fig. 3 und 4 mit tangentialer Verstärkung). Die vorliegende Erfindung schließt darüber hinaus auch Kombinationen von tangentialer und axialer Draht- und/oder Faserlage mit ein, die in beliebigen Winkeln zueinander versetzt sein können. Dabei werden die beschichteten Drähte und/oder Fasern 4, zum Beispiel spulenförmig um die Kühlmittelleitung 3 gewickelt, bevor diese in den Hohlraum des Bauteils 1 eingebracht wird.

Bevorzugterweise werden im Sinne der vorliegenden Erfindung mit Matrixmaterial 5 beschichtete Drähte und/oder Fasern 4 eingesetzt. Besonders bevorzugt im Sinne der vorliegenden Erfindung wird hier eine Legierung eingesetzt, die CuCr1Zr oder CuAgZr umfasst.

Bevorzugte Ausführungsbeispiele sind in Fig. 3 und 4 dargestellt. Eine Auslegung auf Basis der Komponentenbeanspruchung (Wärmefluss 20MW/m2) und der Werkstoffkenngrößen (thermische Leitfähigkeit, thermisches Ausdehnungsverhalten, mechanische Eigenschaften) ist nach Bestimmung dieser Eigenschaften machbar. Bei der Herstellung der Bauteile 1 wird ein Hohlkörper 2 aus W (mit der erforderlichen Außenkontur) mit dem Cu-Kühlrohr 3 und den beschichteten W-Drähten und/oder Fasern 4 gefüllt. Danach wird der Hohlkörper 2 an beiden Enden vakuumverschweißt und in einer Heiß-Isostatischen-Presse verdichtet. Die Verdichtung erfolgt durch den Druck im offenen Kühlrohr 3. Fig. 3 und 4 zeigen Bauteile mit einer tangentialen Draht- und/oder Faserverstärkung 4, die durch Umwickeln des Kühlrohres 3 mit dem CuCr1Zr-beschichteten W-Draht und/oder Faser realisiert werden. Je nach Bedarf können auch Komponenten mit einer axialen Draht- und/oder Faserverstärkung, durch Füllen des Hohlraumes 2 zwischen W-Form und Kühlrohr 3 mit Bündeln von beschichteten W-Drähten und/oder Fasern, hergestellt werden. Die W-Drähte und/oder Fasern sind dabei jeweils mit der CuCr1Zr- oder einer vergleichbaren Legierung 5 beschichtet (in Fig. 3 und 4 nicht dargestellt).

Fig. 3 zeigt eine erfindungsgemäße Divertor-Komponente 1 mit W-Vorform 2, W/CuCr1Zr-Verbundwerkstoff (4) und Cu-Rohr 3. Für die Herstellung des W/CuCr1Zr-Verbundwerkstoffs werden W-Drähte und/oder Fasern 4, die mit der CuCr1Zr-Legierung 5 beschichtet sind, eingesetzt. Der beschichtete Draht und/oder die Faser wird hier auf das Cu-Rohr 3 aufgewickelt und in die W-Vorform 2 eingeführt. Nach Vakuumverschweißen wird die Divertor-Komponente 1 in einem Vorgang heißisostatisch verpresst.

Fig. 4 zeigt eine Divertor-Komponente 10 mit W-Vorform 10, W/CuCr1Zr-Verbundwerkstoff 2 und Cu-Rohr 3 und Cu-Füllkomponente 5 hergestellt durch Heiß-Isostatisches-Pressen. Die W-Vorform 10 ist ursprünglich ein Doppel-U Hohlkörper. Nach dem Verdichten des gefüllten Hohlkörpers werden in zwei Divertor-Komponenten 10 durch Aufschneiden hergestellt.

Die vorliegende Erfindung ist besonders für die Anwendung im Divertor des Fusionsreaktors geeignet.

In einer weiteren bevorzugten Ausführungsform (siehe Fig. 3) der vorliegenden Erfindung schließt das hochtemperaturfeste Oberflächenmaterial 2 die sich axial erstreckende Kühlmittelleitung 3 sowie die diese umgebenden hochtemperaturfesten Drähte und/oder Fasern 4 einschließlich des dieses umgebenden temperaturbeständigen Matrixmaterials 5 zylinderförmin ein. Dieses Bauteil 1 ist somit axial zur Kühlmittelleitung 3 vollständig von dem hochtemperaturfesten Oberflächenmaterial 2 umschlossen.

In einer alternativen Ausführungsform (siehe Fig. 4) ist das erfindungsgemäße Bauteil 1 dadurch gekennzeichnet, dass sich das hochtemperaturfeste Oberflächenmaterial 2 lediglich in einer Fläche befindet, die dem Plasma zugewandt ist. Auf der dem Plasma gegenüberliegenden Seite des Bauteils 1 ist bekanntermaßen eine sehr hohe Temperaturbeständigkeit nicht erforderlich, so dass es hier ausreichend ist, wenn dieser, dem Plasma abgewandte Bereich aus dem Matrixmaterial 5 (siehe Fig. 4) besteht.

Die erfindungsgemäßen Bauteile 1 können beispielsweise dadurch hergestellt werden, dass man wenigstens eine Kühlmittelleitung 3 und diese umgebende hochtemperaturfesten beschichteten Drähte und/oder Fasern 4 sowie ein temperaturbeständiges Matrixmaterial 5 (als Beschichtung) in einen wenigstens einseitig offenen Hohlraum eines hochtemperaturfesten Oberflächenmaterials 2 einbringt, den so erhaltenen Formkörper einkapselt und einem heißisostatischen Pressvorgang aussetzt.

Hierbei wird insbesondere eine Kühlmittelleitung 3 und diese axial umgebenden Drähte und/oder Fasern 4 in den Hohlraum eines hochtemperaturfesten Oberflächenmaterials 2 eingebracht. Die Drähte und/oder Fasern 4 sind dabei mit temperaturbeständigem Matrixmaterial 5 beschichtet.

Alternativ oder in Kombination hierzu ist es auch möglich, dass man in einem ersten Schritt eine Kühlmittelleitung 3 tangential mit hochtemperaturfesten Drähte und/oder Fasern 4 spulenförmig umwickelt, die wiederum mit temperaturbeständigem Matrixmaterial 5 beschichtet sind.

Anschließend wird das so erhaltene Zwischenprodukt einem heißisostatischem Pressen unterzogen, wie dies beispielsweise aus der eingangs genannten DE 43 35 557 C1 bekannt ist.

Eine besondere Ausführungsform der vorliegenden Erfindung ist dadurch gekennzeichnet, dass man insbesondere zwei parallel verlaufende Kühlmittelleitungen 3 in einen Hohlraum einbringt und den gebildeten Formkörper nach dem heißisostatischen Pressen parallel zu den Kühlmittelleitungen 3 in zwei Teile teilt. Hierbei wird ein Bauteil 1 erhalten, dessen dem Plasma abgewandte Seite nicht aus hochtemperaturfestem Oberflächenmaterial 2, sonders im Wesentlichen aus dem Matrixmaterial 5 besteht.

Im Grundsatz stellt in Fig. 5 und 6 das Bezugszeichen 4 den gesamten Bereich zwischen den Bezugszeichen 3 und 6 dar (4 = Cu-MMC). Unverstärkte Bereiche sollen vermieden werden. Deshalb gestaltet sich das Flat-Tile-Design mit dieser Technik (des Füllens von Hohlräumen) etwas komplex (siehe Fig. 1). Aus diesem Grunde werden Verstärkungskanäle vorgeschlagen, die ein geschlossenes "U" bilden (Fig. 6). Die obere Reihe der Drähte und/oder Fasern kann einen anderen Durchmesser haben als die restlichen Kreise.

## Patentansprüche

1. Bauteil (1) aus hochtemperaturfestern Oberflächenmaterial (2) und wenigstens einer im Inneren verlaufenden Kühlmittelleitung (3), **dadurch gekennzeichnet, dass** der Zwischenraum zwischen dem Wolfram oder Wolframlegierung umfassenden Oberflächenmaterial (2) und der Kühlmittelleitung (3) mit hochtemperaturfesten Drähten und/oder Fasern (4) umfassend Wolfram oder Wolframlegierung gefüllt ist, wobei die Drähte und/oder Fasern (4) mit Matrixmaterial beschichtet sind.

2. Bauteil (1) nach Anspruch 1, **dadurch gekennzeichnet, dass** sich die Drähte und/oder Fasern (4) in axialer oder tangentialer Richtung zur Kühlmittelleitung (3) erstrecken.

3. Bauteil (1) nach Anspruch 2, **dadurch gekennzeichnet, dass** die beschichteten Drähte und/oder Fasern (4) spulenförmig um die Kühlmittelleitung (3) gewickelt sind.

4. Bauteil (1) nach einem der Ansprüche 1 bis 3, **dadurch gekennzeichnet, dass** das temperaturbeständige Matrixmaterial (5) eine Legierung aus CuCr¹Zr oder CuAgZr umfasst.

5. Bauteil (1) nach einem der Ansprüche 1 bis 4, **dadurch gekennzeichnet, dass** das hochtemperaturfeste Oberflächenmaterial (2) die sich axial zur Kühlmittelleitung (3) erstreckende Oberfläche vollständig umfasst und die hochtemperaturfesten Drähte und/oder Fasern (4) mit umgebendem temperaturbeständigem Matrixmaterial (5) zylinderförmig einschließt.

6. Bauteil (1) nach einem der Ansprüche 1 bis 4, **dadurch gekennzeichnet, dass** das hochtemperaturfeste Oberflächenmaterial (2) die axial zur Kühlmittelleitung (3) erstreckende Oberfläche teilweise umfasst und die hochtemperaturfesten Drähte und/oder Fasern (4) mit umgebendem temperaturbeständigem Matrixmaterial (5) halbzylinderförmig einschließt.

7. Bauteil (1) nach einem der Ansprüche 1 bis 4, **dadurch gekennzeichnet, dass** das hochtemperaturfeste Oberflächenmaterial (2) die äußere Oberfläche der mit hochtemperaturfesten Drähten und/oder Fasern (4) umgebenen Kühlmittelleitung auf der **einer** Strahlungsquelle zugewandten Fläche bedeckt und die der Strahlungsquelle abgewandten Bereiche nicht bedeckt sind.

8. Verfahren zur Herstellung eines Bauteils (1) nach einem der Ansprüche 1 bis 7, **dadurch gekennzeichnet, dass** wenigstens eine Kühlmittelleitung (3) und diese umgebende hochtemperaturfeste Drähte und/oder Fasern (4) mit einem temperaturbeständigen Matrixmaterial (5) beschichtet werden, **das** in einen wenigstens einseitig offenen Hohlraum eines hochtemperaturfesten Obertlächenmaterials (2) eingebracht **wird,** wobei der so erhaltene Formkörper einkapselt und einem heißisostatischen Pressvorgang ausgesetzt wird.

9. Verfahren nach Anspruch 8, **dadurch gekennzeichnet, dass** wenigstens eine Kühlmittelleitung (3) und diese axial umgebende Fasern (4) in den Hohlraum eines hochtemperaturfesten Oberflächenmaterials (2) eingebracht werden, wobei die Fasern mit temperaturbeständigem Matrixmaterial (5) beschichtet sind.

10. Verfahren nach Anspruch 8, **dadurch gekennzeichnet, dass** in einem ersten Schritt eine Kühlmittelleitung (3) tangential mit hochtemperaturfesten Fasern (4) spulenförmig umwickelt wird, die mit temperaturbeständigem Matrixmaterial (5) beschichtet sind.

11. Verfahren nach einem der Ansprüche 8 bis 10, **dadurch gekennzeichnet, dass** zwei parallel verlaufende Kühlmittelleitungen (3) in den Hohlraum eingebracht werden, diese mit beschichteten Fasern und/oder Drähten gefüllt **wird** und der gebildete Formkörper nach Verdichtung parallel zu den Kühlmittelleitungen (3) in zwei Teile geteilt wird.

## Claims

1. A component (1) consisting of a refractory surface material (2) and at least one coolant duct (3) extending inside, **characterized in that** the space between said surface material (2), which comprises tungsten or a tungsten alloy, and said coolant duct (3) is filled with refractory wires and/or fibers (4) comprising tungsten or a tungsten alloy, the wires and/or fibers (4) being coated with a matrix material.

2. The component (1) according to claim 1, **characterized in that** said wires and/or fibers (4) extend in axial or tangential direction with respect to the coolant duct (3).

3. The component (1) according to claim 2, **characterized in that** said coated wires and/or fibers (4) are wound in a coil shape around said coolant duct (3).

4. The component (1) according to any of claims 1 to 3, **characterized in that** said temperature-resistant matrix material (5) comprises an alloy of CuCr¹Zr or CuAgZr.

5. The component (1) according to any of claims 1 to 4, **characterized in that** said refractory surface material (2) completely surrounds the surface extending axially to said coolant duct (3) and encloses said refractory wires and/or fibers (4) with the surrounding temperature-resistant matrix material (5) in a cylinder shape.

6. The component (1) according to any of claims 1 to 4, **characterized in that** said refractory surface material (2) partially surrounds the surface extending axially to said coolant duct (3) and encloses said refractory wires and/or fibers (4) with the surrounding temperature-resistant matrix material (5) in a half-cylinder shape.

7. The component (1) according to any of claims 1 to 4, **characterized in that** said refractory surface material (2) covers the external surface of said coolant duct surrounded with refractory wires and/or fibers (4) on the side facing a radiation source, and the regions facing away from said radiation source are not covered.

8. A process for preparing a component (1) according to any of claims 1 to 7, **characterized in that** at least one coolant duct (3) and refractory wires and/or fibers (4) surrounding the same are coated with a temperature-resistant matrix material (5), which is introduced in a cavity in a refractory surface material (2) that is open on at least one side, wherein the thus obtained shaped body is encapsulated and subjected to a hot isostatic pressing process.

9. The process according to claim 8, **characterized in that** at least one coolant duct (3) and fibers (4) surrounding it axially are introduced in the cavity in a refractory surface material (2), wherein said fibers have been coated with a temperature-resistant matrix material (5).

10. The process according to claim 8, **characterized in that** in a first step a coolant duct (3) is wrapped tangentially in a coil shape with refractory fibers (4) coated with a temperature-resistant matrix material (5).

11. The process according to any of claims 8 to 10, **characterized in that** two coolant ducts (3) running in parallel are introduced in said cavity, the latter is filled with coated fibers and/or wires, and the shaped body formed is compressed and then divided into two parts parallel to said coolant ducts (3).

## Revendications

1. Composant (1) consistant en un matériau de surface réfractaire (2) et au moins une conduite de fluide de refroidissement (3) s'étendant à l'intérieur, **caractérisé en ce que** l'espace entre le matériau de surface (2), qui comprend du tungstène ou un alliage de tungstène, et ladite conduite de fluide de refroidissement (3) est rempli avec des fils et/ou fibres réfractaires (4) comprenant du tungstène ou un alliage de tungstène, lesdits fils et/ou fibres (4) étant recouverts d'un matériau de matrice.

2. Composant (1) selon la revendication 1, **caractérisé en ce que** lesdits fils et/ou fibres (4) s'étendent dans une direction axiale ou tangentielle à la conduite de fluide de refroidissement (3).

3. Composant (1) selon la revendication 2, **caractérisé en ce que** lesdits fils et/ou fibres (4) recouverts sont enroulés autour de la conduite de fluide de refroidissement (3) en forme de spirale.

4. Composant (1) selon l'une quelconque des revendications 1 à 3, **caractérisé en ce que** ledit matériau de matrice résistant à la température (5) comprend un alliage de CuCr¹Zr ou CuAgZr.

5. Composant (1) selon l'une quelconque des revendications 1 à 4, **caractérisé en ce que** ledit matériau de surface réfractaire (2) entoure complètement la surface s'étendant axialement de la conduite de fluide de refroidissement (3) et enferme cylindriquement lesdits fils et/ou fibres réfractaires (4) avec le matériau de matrice résistant à la température (5) les entourant.

6. Composant (1) selon l'une quelconque des revendications 1 à 4, **caractérisé en ce que** ledit matériau de surface réfractaire (2) entoure partiellement la surface s'étendant axialement de la conduite de fluide de refroidissement (3) et enferme semi-cylindriquement lesdits fils et/ou fibres réfractaires (4) avec le matériau de matrice résistant à la température (5) les entourant.

7. Composant (1) selon l'une quelconque des revendications 1 à 4, **caractérisé en ce que** ledit matériau de surface réfractaire (2) couvre la surface extérieure de la conduite de fluide de refroidissement entourés de fils et/ou de fibres réfractaires (4) au côté face à une source de rayonnement, et les régions opposées à ladite source de rayonnement ne sont pas couvertes.

8. Procédé pour préparer un composant (1) selon l'une quelconque des revendications 1 à 7, **caractérisé en ce qu'**au moins une conduite de fluide de refroidissement (3) et des fils et/ou fibres réfractaires (4) l'entourant sont enduits avec un matériau de matrice résistant à la température (5), qui est introduit dans une cavité d'un matériau de surface réfractaire (2) ouverte sur au moins un côté, le corps façonné ainsi obtenu étant encapsulé et soumis à un procédé de pressage isostatique à chaud.

9. Procédé selon la revendication 8, **caractérisé en ce qu'**au moins une conduite de fluide de refroidissement (3) et des fibres (4) l'entourant axialement sont introduites dans la cavité d'un matériau de surface réfractaire (2), les fibres étant enduits avec un matériau de matrice résistant à la température (5).

10. Procédé selon la revendication 8, **caractérisé en ce que**, dans une première étape, une conduite de fluide de refroidissement (3) est enroulée tangentiellement en forme de spirale avec des fibres réfractaires (4) enduites avec un matériau de matrice résistant à la température (5).

11. Procédé selon l'une quelconque des revendications 8 à 10, **caractérisé en ce que** deux conduites de fluide de refroidissement (3) s'étendant parallèlement sont introduites dans la cavité, le dernier est rempli avec des fibres et/ou fils enduits, et le corps façonné ainsi obtenu est comprimé et ensuite divisé en deux pièces parallèlement aux conduites de fluide de refroidissement (3).
